# FASCICULE DE BREVET EUROPEEN

(11) **EP 1 112 978 B1**
(45) Date de publication et mention de la délivrance du brevet: **14.07.2004**
(21) Numéro de dépôt: 00403674.5
(22) Date de dépôt: 26.12.2000
(51) Int. Cl.: C03B 37/029

(54) **Agencement d'entrée de préforme pour four de tirage de fibre optique et four doté d'un tel agencement**
Vorrichtung zum Einführen einer Vorform in einen Ziehofen für optische Fasern und mit dieser Einführvorrichtung versehener Ziehofen
Preform entry device for an optical fibre draw furnace and draw furnace comprising said entry device

(30) Priorité: 27.12.1999 FR 9916526
(43) Date de publication de la demande: 04.07.2001
(73) Titulaire: ALCATEL, 75008 Paris (FR)
(72) Inventeur: Pedrido, Carlos, 2017 Boudry ne (CH); Leuenberger, Bernard, 2022 Bevaix (CH)
(74) Mandataire: Vigand, Régis Louis Michel

(56) Documents cités:
- EP-A- 0 803 478
- EP-A- 0 849 232
- DE-A- 3 903 466
- DE-A- 4 006 839
- GB-A- 2 044 751
- GB-A- 2 305 663
- US-A- 4 477 274
- PATENT ABSTRACTS OF JAPAN vol. 9, no. 218, 5 septembre 1985 (1985-09-05) -& JP 60 081039 A (SUMITOMO ELECTRIC IND. CO. LTD.), 9 mai 1985 (1985-05-09)
- PATENT ABSTRACTS OF JAPAN vol. 4, no. 46, 10 avril 1980 (1980-04-10) & JP 55 020260 A (NT&T CORP.), 13 février 1980 (1980-02-13)
- PATENT ABSTRACTS OF JAPAN vol. 13, no. 182, 27 avril 1989 (1989-04-27) & JP 01 009832 A (SUMITOMO ELECTRIC IND. CO. LTD.), 13 janvier 1989 (1989-01-13)
- PATENT ABSTRACTS OF JAPAN vol. 14, no. 390, 23 août 1990 (1990-08-23) & JP 02 145452 A (FURUKAWA ELECTRIC CO. LTD.), 4 juin 1990 (1990-06-04)
- PATENT ABSTRACTS OF JAPAN vol. 13, no. 211, 17 mai 1989 (1989-05-17) & JP 01 028242 A (SUMITOMO ELECTRIC IND. CO. LTD.), 30 janvier 1989 (1989-01-30)

## Description

L'invention concerne un agencement d'entrée de préforme pour four de tirage de fibre optique, un four doté d'un tel agencement.

La production de fibres optiques par tirage à partir de préformes chauffées dans un four est une opération impliquant nécessairement des phases d'arrêt de production au cours desquelles une préforme utilisée pour produire de la fibre doit être remplacée par une autre.

Il est connu d'arrêter un four de tirage pour exécuter une opération de remplacement de préforme de manière à permettre l'extraction de la préforme à remplacer et la mise en place de sa remplaçante dans de bonnes conditions. Cette solution a pour principal inconvénient d'impliquer un arrêt de la production de fibre pendant un temps relativement long, par exemple de l'ordre de trois heures, car il est nécessaire de ramener le four utilisé dans les conditions de production, notamment en matière de température, avant de redémarrer la production par tirage. De plus, à l'occasion de ces opérations de remplacement d'une fibre par une autre, de l'air ambiant peut s'introduire dans le four qui est rempli de gaz inerte en phase de tirage de fibre et cette introduction risque d'entraîner des détériorations en particulier au niveau des éléments en graphite situés à l'intérieur du four qui sont portés à haute température, lorsque le four fonctionne.

Il est connu de réaliser un agencement d'entrée de préforme dans un four de tirage qui vise à assurer l'étanchéité du four lorsqu'une préforme est présente. Un exemple d'agencement de ce type est notamment décrit dans le document DE 4006839. Il y est prévu un joint rigide venant ceinturer la préforme au sommet d'un élément servant de couvercle de four, qui est traversé par la préforme et qui est intérieurement agencé pour permettre d'injecter un gaz inerte autour de la préforme et dans le four. Par contre cet agencement d'entrée de préforme ne résout pas le problème de conservation de l'étanchéité d'un four, lors des changements de préforme.

L'invention propose donc un agencement d'entrée de préforme dans un four du type incluant une enceinte en haut de laquelle est ménagée une ouverture prévue pour permettre l'entrée d'une préforme, déplacée verticalement en translation et de haut en bas en phase de tirage de fibre, ainsi qu'un agencement d'entrée de préforme. Ledit agencement comporte un injecteur situé au niveau de l'ouverture d'introduction de préforme pour assurer une injection de gaz inerte sur le pourtour de la préforme de manière à remplir l'enceinte du four. L'agencement comporte aussi un joint d'étanchéité, fixé par l'intermédiaire d'un porte-joint au-dessus de l'injecteur et prévu pour permettre le passage de la préforme dont il vient enserrer le corps principal cylindrique, en vue d'empêcher toute circulation gazeuse entre le milieu ambiant et l'intérieur du four au niveau où il est situé.

Selon l'invention, l'agencement d'entrée inclut un sas permettant de fermer de manière étanche le haut du four, au-dessus de l'injecteur, tant en présence qu'en l'absence de préforme et de maintenir une surpression interne de gaz inerte en entrée de four pour éviter l'entrée d'air ambiant par cette entrée de four.

Selon une réalisation préférée de l'invention, l'agencement comporte:
- un obturateur situé au-dessus de l'injecteur (6') pour permettre la descente du corps de préforme dans l'enceinte du four, lorsqu'il est ouvert, et pour fermer de manière étanche le haut du four au-dessus de l'injecteur lorsqu'il est fermé, en l'absence de préforme à son niveau ;
- une chambre de sas délimitée longitudinalement par deux étages de joints d'étanchéité dans lesquels le corps d'une préforme est prévu pour coulisser de manière étanche, ladite chambre assurant une fonction de sas d'étanchéité en liaison avec l'obturateur vis-à-vis du four par l'intermédiaire des joints d'au moins l'un des étages, dès qu'une préforme est présente au niveau d'au moins l'un ces étages qu'elle obture et que la longueur du corps de préforme est supérieure ou au moins égale à une limite d'exploitation maximale, par tirage, de la préforme.

Selon une autre réalisation préférée de l'invention, l'injecteur de l'agencement d'entrée est muni d'évents d'injection de gaz inerte qui sont orientés vers le sas qu'il comporte, en plus d'évents d'injection orientés vers l'intérieur du four

L'invention concerne également les fours de tirage prévus pour permettre la production de fibres en verre qui comportent un agencement d'entrée selon l'invention définie ci-dessus.

Décrivons maintenant une préforme équipée pour coopérer avec un agencement tel que défini ci-dessus. Cette préforme est plus particulièrement destinée à la production de fibre de verre par tirage à l'intérieur d'un four et à partir d'une extrémité, dite de tirage, d'un corps principal cylindrique qu'elle comporte. Elle est munie d'une pièce de support venant se monter à une extrémité d'une tige qui prolonge le corps à son extrémité supérieure, à l'opposé de l'extrémité de tirage, et qui a un diamètre inférieur à celui du corps.

Ladite préforme porte un tube de continuité qui est monté sur la tige entre le corps et la pièce de support et dont le diamètre extérieur correspond à celui du corps qu'il prolonge, pratiquement sans discontinuité.

L'invention, ses caractéristiques et ses avantages sont précisés dans la description qui suit en liaison avec les figures évoquées ci-dessous.
La figure 1 présente un schéma d'un four de tirage de fibre optique dans lequel est partiellement introduite une préforme au travers d'un agencement d'entrée de type connu.
La figure 2 présente un schéma d'un four de tirage de fibre optique comportant un agencement d'entrée, selon l'invention, avec, en position d'introduction, une préforme équipée pour être utilisée avec un tel agencement.
La figure 3 présente un schéma du four et de la préforme selon la figure 2, dans les conditions normales de production de fibre par tirage
La figure 4 présente un schéma du four et de la préforme selon la figure 2, dans les conditions normales de production, en fin d'exploitation de la préforme, avant son retrait.

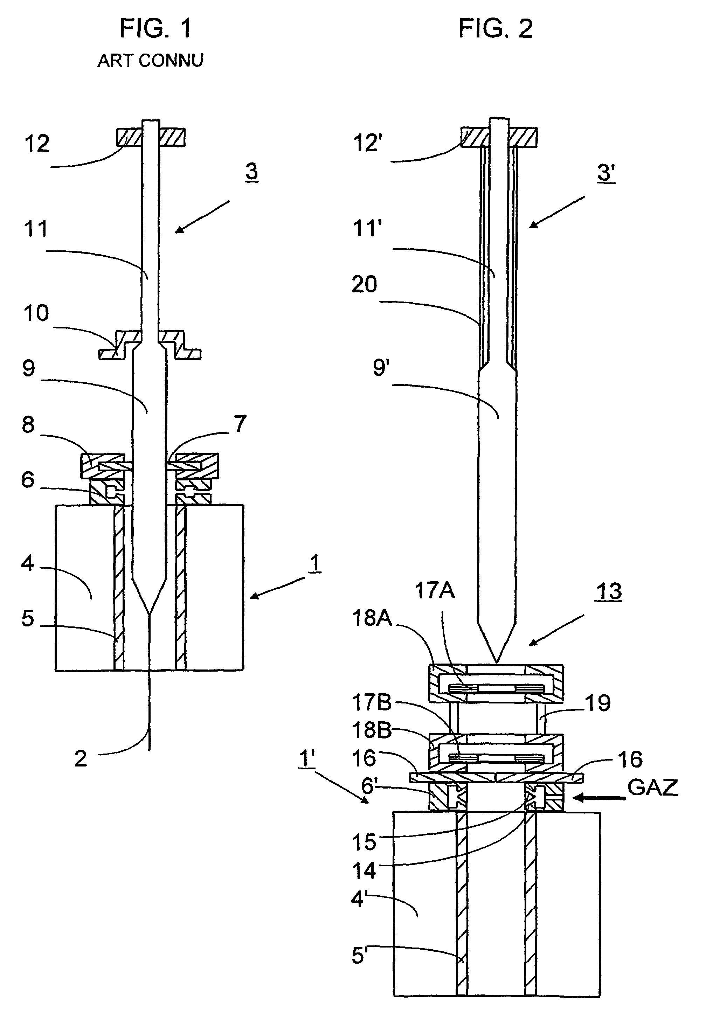

Un classique four de tirage 1 destiné à permettre la production d'une fibre optique 2 à partir d'une préforme 3 est schématisé sur la figure 1. Ce four comporte une enceinte 4 au sommet de laquelle est ménagée une ouverture prévue pour permettre l'entrée d'une préforme 2, déplacée en translation du haut vers le bas en phase de tirage de fibre. Le bas de l'enceinte 3 du four est également ouvert pour permettre la descente de la fibre 2, obtenue par tirage à partir de l'extrémité inférieure de la préforme 3, alors que le verre qui constitue la préforme est amolli par la chaleur que dégage le four.

Pour obtenir un tirage de fibre dans les meilleures conditions de température possible, un gainage 5, d'allure cylindrique et usuellement en graphite, est positionné verticalement dans le four entre l'ouverture d'entrée de préforme et l'ouverture de sortie de fibre, de manière à assurer un chauffage homogène de la partie de préforme d'où est extraite la fibre et de la partie de cette fibre qui vient d'être extraite par tirage.

Cette opération de tirage s'effectue en atmosphère contrôlée à l'intérieur du four où il est classiquement injecté un gaz inerte. Dans l'exemple de réalisation connue, ici illustré, l'injection est effectuée par l'intermédiaire d'un injecteur 6, d'allure cylindrique, qui est positionné sur le four au niveau de l'ouverture d'introduction de préforme de manière à assurer une injection de gaz sur le pourtour de cette préforme et vers l'intérieur du gainage 5 que contient le four.

Un joint d'étanchéité 7, usuellement en graphite et donc rigide, est monté dans un porte-joint 8, positionné au-dessus de l'injecteur 6. Il est prévu pour permettre le passage de la préforme 3 dont il vient enserrer le corps principal 9, d'allure cylindrique, de manière à empêcher toute circulation gazeuse entre le milieu ambiant et l'intérieur du four au niveau où il est situé, lorsque l'extrémité de tirage de la préforme, d'où est extraite la fibre, est dans le four.

Le corps cylindrique 9 de préforme 3 se prolonge classiquement par une tige 11 et il est ici supposé logé sous un capot supérieur 10 qui est placé au-dessus du four et que traverse la tige 11. Comme il est connu la tige 11 d'une préforme a généralement un diamètre inférieur à celui du corps de cette préforme à des fins d'économie de matière et de gain de temps lors de la réalisation de la préforme, ceci étant rendu possible par le fait qu'il n'est pas prévu qu'elle soit utilisée en tant que partie de préforme d'où peut être extraite une fibre.

Une pièce de support 12 est fixée à l'extrémité de la tige 11, qui est à l'opposé du corps 9. Elle est prévue pour permettre le déplacement en translation verticale de la préforme par rapport au four 4 entre une position d'entrée, pour laquelle la préforme est au-dessus du four et peut être mise en place ou retirée, et une position extrême, pour laquelle au moins une partie de la tige se trouve à l'intérieur du four, lorsque la longueur du corps a été réduite à sa valeur minimale du fait de l'étirage réalisé.

Lors de l'introduction ou du retrait d'une préforme 3 dans le four 4, il y a un laps de temps pendant lequel il peut y avoir des échanges gazeux entre l'intérieur du four et le milieu ambiant, au travers de l'ouverture prévue au centre du joint 7 pour le passage de la préforme.

Selon l'invention, ceci peut être évité en plaçant un sas 13 permettant de fermer le haut du four 4, de manière étanche, en l'absence de préforme et lors des introductions ou retraits et préférablement de maintenir une surpression interne en entrée de four pour éviter toute entrée d'air ambiant, celui-ci étant repoussé vers l'extérieur par le gaz inerte injecté.

Un exemple de four de tirage équipé d'un tel sas est représenté sur les figures 2, 3 et 4, avec une préforme 3' verticalement positionnée de manière différente pour chacune de ces figures. Le four de tirage 1' est supposé correspondre au four 1 présenté sur la figure 1, avec une enceinte 4' et un gainage 5' correspondant à l'enceinte 4 et au gainage 5 four 1. Un injecteur 6' correspondant à l'injecteur 6 du four 4 est monté au-dessus de l'enceinte 4' au niveau de l'ouverture d'introduction de préforme de cette enceinte qu'il entoure.

Dans une forme préférée de réalisation, cet injecteur 6' comporte des évents 14 et 15 respectivement inclinés en direction de la préforme et les uns vers le bas en direction du four et les autres vers le haut.

Un obturateur 16 est positionné au-dessus de l'injecteur 6' de manière à permettre de fermer de manière étanche le haut du four, en l'absence de préforme. Il est ici supposé comporter deux parties mobiles de fermeture qui viennent recouvrir l'ouverture de passage de préforme axialement ménagée au centre de l'injecteur 6', lorsqu'elles sont rapprochées l'une de l'autre. L'ouverture de l'obturateur 16, prévue pour permettre la descente d'une préforme dans le four, est ici supposée réalisée par un écartement des deux parties mobiles de fermeture qu'il comporte. L'écartement est par exemple réalisé de manière simultanée pour les deux parties, sous l'action de moyens de déplacement usuels, de même que le rapprochement des parties mobiles à la fermeture. Comme il est connu, ces moyens de déplacement qui ne sont pas représentés ici sont par exemple de type mécanique, électrique, pneumatique ou hydraulique.

Une chambre de sas est prévue au-dessus de l'obturateur 16, elle est ici supposée délimitée longitudinalement par deux étages de joints d'étanchéité 17A et 17B, dans lesquels le corps de préforme coulisse lors de ses déplacements verticaux. Les joints sont ici supposés être des joints cylindriques en graphite qui sont superposés et ils sont tenus par des porte-joints 18A et 18B. Ces porte-joints sont solidaires d'une structure de support, non représentée, de l'agencement d'entrée de préforme qu'ils forment avec les joints, l'obturateur et l'injecteur, dans la réalisation envisagée ici. Il est aussi prévu de refroidir les joints 17A, 17B, par exemple par conduction, comme connu en ce domaine, pour éviter qu'ils ne se dégradent prématurément.

Il est prévu que les deux étages de joints soient séparés par une distance choisie de manière que la fonction de sas d'étanchéité assurée par les joints 17A et 17B en liaison avec l'obturateur 16 vis-à-vis du four, soit toujours remplie avec la participation d'au moins l'un des étages de joint, dès qu'une préforme est introduite dans l'agencement d'entrée dont ces joints font partie et tant que la longueur de corps de préforme est supérieure ou au moins égale à une limite d'exploitation maximale, par tirage, prévue pour les préformes, cette limite correspondant à une longueur minimale déterminée "Imin". Dans l'exemple de réalisation présenté, un manchon de liaison 19, de longueur déterminée, est placé entre les porte-joints 18A et 18B. La longueur de ce manchon est fixée en fonction de la longueur minimale de corps de préforme et donc pratiquement du cône d'extrémité de tirage qui subsiste à l'extrémité de tirage, après une exploitation maximale prévue pour une préforme par tirage de fibre.

Selon une forme de réalisation de l'invention, plus particulièrement destiné à une exploitation optimale de l'agencement d'entrée, selon l'invention, avec des préformes dont la tige 11' est classiquement plus mince que le corps 9', il est prévu de manchonner la tige de chacune de ces préformes sur la longueur de cette tige entre le corps 9' et la pièce de support 12' à l'aide d'un tube de continuité, creux, 20 dont le diamètre extérieur correspond à celui du corps 9' qu'il prolonge, pratiquement sans discontinuité, comme on le voit sur les figures 2 à 4. Ce tube est par exemple réalisé en quartz et il est enfilé sur la préforme avant fixation de la pièce de maintien 12'.

L'introduction d'une préforme 3' dans un four implique le positionnement de la préforme, préférablement munie d'un tube de continuité 20, au-dessus du sas 13 de l'agencement d'entrée 13 du four, comme on le voit sur la figure 2. Ce positionnement est classiquement obtenu par fixation de la pièce de support 12' de la préforme à un dispositif de positionnement et de support, mobile verticalement, connu par ailleurs et non représenté ici. Un tel dispositif est notamment décrit dans le cadre d'une installation de production de fibre définie dans le brevet américain 4309201.

La préforme 3' est abaissée de manière à pénétrer dans le sas 13 de l'agencement d'entrée du four. Elle ne peut descendre au travers de l'obturateur 16 qui obture le passage conduisant vers l'intérieur de l'enceinte 4', comme illustré sur la figure 2, si le four est déjà en exploitation et qu'en conséquence il est, d'une part, rempli de gaz inerte et, d'autre part, à la température requise pour le tirage de fibre

L'abaissement de la préforme 3' entraîne le passage du cône, qui constitue son extrémité de tirage de fibre, au travers de l'ouverture axiale du premier étage de joints 17A à l'intérieur duquel vient alors frotter le corps cylindrique de révolution 9' de cette préforme, ce qui obture ladite ouverture axiale.

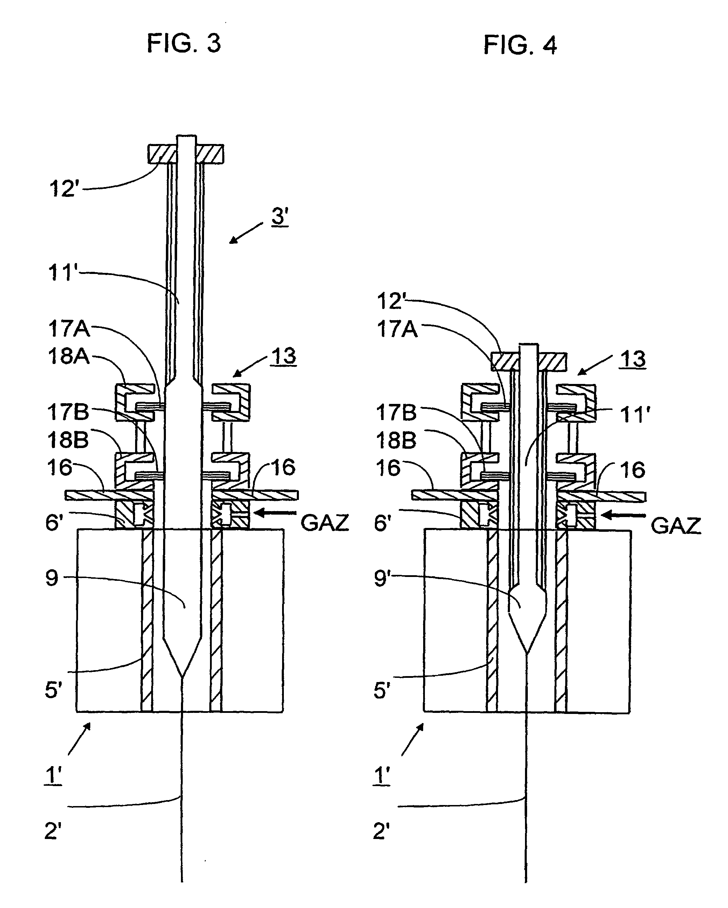

Il est alors possible d'ouvrir l'obturateur 16, dont les deux parties mobiles s'écartent l'une de l'autre, dans l'exemple de réalisation d'obturateur proposé plus haut. Le gaz inerte injecté par l'intermédiaire des évents 15 de l'injecteur tend alors à remplir le sas. La descente de la préforme 3' est alors poursuivie jusqu'à ce que son extrémité de tirage soit dans une position située à l'intérieur du gainage 5' pour laquelle peut être lancée l'opération de tirage de fibre proprement dite. Cette opération qui conduit à l'obtention d'une fibre 2' à l'extrémité de tirage de la préforme est alors poursuivie selon les besoins. Dans l'exemple proposé, il est à noter que le corps 9' est alors partiellement logé dans les ouvertures axiales des deux étages de joints 17A et 17B et dans le gainage 5' où se situe alors son extrémité de tirage, comme on le voit sur la figure 3. L'injection de gaz inerte qui est alors effectuée par l'intermédiaire de l'injecteur 6' est alors totalement réalisée vers l'intérieur du gainage par les évents que comporte l'injecteur, puisque le sas n'est plus alimenté en gaz du fait de la présence du corps de préforme dans l'ouverture axiale des joints de l'étage inférieur 17B. La préforme 3' est alors progressivement abaissée, en fonction de la production de fibre à partir du corps 9' dont la taille diminue du fait du tirage.

Il arrive un moment où la hauteur du corps de préforme est réduite d'une quantité telle que le haut de ce corps descend au niveau des joints de l'étage supérieur 17A. Avec une préforme non équipée de tube de continuité, il devient nécessaire d'arrêter l'opération de tirage en cours avant que le rétrécissement existant au niveau de jonction du corps 9' avec la tige 11' ne pénètre dans l'ouverture axiale des joints de l'étage inférieur 17B, si l'on veut éviter tout risque de pénétration d'air par ce passage, lorsqu'il n'est plus totalement obturé.

Par contre, il est possible de continuer l'opération de tirage plus loin avec une préforme 9' équipée d'un tube de continuité 20, tel que décrit plus haut, puisque les joints d'étanchéité, tant de l'étage supérieur que de l'étage inférieur, continuent à jouer leur rôle en enserrant le tube de continuité dont le diamètre correspond à celui du corps 9'. Ceci permet donc d'utiliser la préforme 3', ainsi équipée, jusqu'au moment où la hauteur de corps 9' restante atteint la valeur minimale admissible évoquée plus haut. Il est alors nécessaire de substituer une nouvelle préforme à celle qui est devenue inutilisable.

Ceci implique l'interruption de l'opération de tirage de fibre et le retrait par le haut de la préforme inutilisable. Du fait de son étanchéité le sas est resté rempli de gaz inerte et le retrait progressif de la préforme n'est donc pas susceptible d'occasionner d'entrée d'air au moment où l'extrémité conique de tirage du corps 9' traverse les joints de l'étage inférieur 17B, en particulier si l'injection de gaz par l'intermédiaire de l'injecteur 6' est poursuivie, comme envisagé ici. Il n'y a donc pas de risque de variation de température due à une entrée d'air ambiant dans le four, lors de la sortie du cône d'extrémité de tirage hors de ces joints d'étage inférieur. Comme les joints d'étanchéité de l'étage supérieur 17A continuent à jouer leur rôle en coopération avec le tube de continuité et en raison de la hauteur entre étages choisie, qui est ici fixée par la longueur du manchon 19, il est possible de fermer l'obturateur 16, dès que l'extrémité de tirage de la préforme 3' est passée au-dessus de lui et alors que l'étanchéité du sas par rapport à l'extérieur est toujours maintenue. Il est alors possible de poursuivre le retrait de la préforme hors de l'agencement d'entrée et sans risque pour le four, une fois l'obturateur fermé.

Bien entendu, il doit être compris que les opérations décrites ci-dessus ne nécessite pas qu'une préforme soit nécessairement devenue inutilisable pour être extraite et il est possible de retirer une préforme partiellement utilisée, s'il n'est pas nécessaire de poursuivre l'opération de tirage, au-delà d'une longueur de fibre donnée.

## Revendications

1. Agencement d'entrée de préforme (3') dans un four (1') de tirage de fibre (2') du type incluant une enceinte (4') en haut de laquelle est ménagée une ouverture prévue pour permettre l'entrée d'une préforme, déplacée verticalement en translation et de haut en bas en phase de tirage de fibre, ainsi qu'un agencement (13') d'entrée de préforme, ledit agencement comportant un injecteur (6') situé au niveau de l'ouverture d'introduction de préforme pour assurer une injection de gaz inerte sur le pourtour de la préforme de manière à remplir l'enceinte du four, et au moins un joint d'étanchéité (17B) fixé par l'intermédiaire d'un porte-joint au-dessus de l'injecteur et prévu pour permettre le passage de la préforme dont il vient enserrer le corps principal cylindrique (9'), en vue d'empêcher toute circulation gazeuse entre le milieu ambiant et l'intérieur du four au niveau où il est situé, ledit agencement d'entrée étant **caractérisé en ce qu'**il inclut un sas (13) permettant de fermer de manière étanche le haut du four, au-dessus de l'injecteur, tant en présence qu'en l'absence de préforme et de maintenir une surpression interne de gaz inerte en entrée de four pour éviter l'entrée d'air ambiant à son niveau.

2. Agencement d'entrée selon la revendication 1, **caractérisé en ce qu'**il comporte un sas (13) comprenant:
- un obturateur (16) situé au-dessus de l'injecteur (6') pour permettre la descente du corps de préforme dans l'enceinte du four, lorsqu'il est ouvert, et pour fermer de manière étanche le haut du four au-dessus de l'injecteur lorsqu'il est fermé, en l'absence de préforme à son niveau ;
- une chambre de sas délimitée longitudinalement par deux étages de joints d'étanchéité (17A, 17B) dans lesquels le corps d'une préforme est prévu pour coulisser de manière étanche, ladite chambre assurant une fonction de sas d'étanchéité en liaison avec l'obturateur vis-à-vis du four par l'intermédiaire des joints d'au moins l'un des étages, dès qu'une préforme est présente au niveau d'au moins l'un ces étages qu'elle obture et que la longueur du corps (9') de préforme est supérieure ou au moins égale à une limite "Imin" d'exploitation maximale, par tirage, de la préforme.

3. Agencement d'entrée, selon la revendication 2, dans lequel la distance entre étages de joints du sas qu'il comporte est liée à la longueur minimale qui correspond à la limite "Imin" d'exploitation maximale prévue pour les préformes.

4. Agencement d'entrée, selon l'une des revendications 1 à 3, dans lequel l'injecteur est muni d'évents (15) d'injection de gaz inerte qui sont orientés vers le sas qu'il comporte, en plus d'évents d'injection (14) orientés vers l'intérieur du four.

5. Agencement d'entrée, selon l'une des revendications 1 à 4, dans lequel il est prévu qu'au moins un des étages soit composé de joints (17A et/ou 17B) en graphite, superposés.

6. Agencement d'entrée, selon la revendication 5, dans lequel il est prévu un refroidissement des joints en vue d'éviter leur dégradation prématurée.

7. Four de tirage de fibre (2') du type incluant une enceinte (4') en haut de laquelle est ménagée une ouverture prévue pour permettre l'entrée d'une préforme, déplacée verticalement en translation et de haut en bas en phase de tirage de fibre, ainsi qu'un agencement (13') d'entrée de préforme au-dessus de l'enceinte, **caractérisé en ce que** l'agencement d'entrée est un agencement d'entrée selon au moins l'une des revendications 1 à 6.

## Patentansprüche

1. Vorrichtung zum Einführen einer Vorform (3') in einen Faserziehofen (1') des Typs, der eine Kammer (4') aufweist, an deren Oberseite eine Öffnung ausgespart ist, damit eine Vorform eingeführt werden kann, die in einer vertikalen Translationsbewegung und von oben nach unten in der Ziehphase der Faser bewegt wird, sowie eine Vorrichtung (13') zum Einführen der Vorform, wobei diese Vorrichtung eine Düse (6') aufweist, die auf Höhe der Einführöffnung angeordnet ist, um ein Inertgas auf den Umfang der Vorform so einzublasen, dass die Kammer des Ofens gefüllt wird, sowie mindestens eine Dichtung (17B), die mittels eines Dichtungshalters oberhalb der Düse befestigt ist und die dafür vorgesehen ist, den Durchtritt der Vorform zu ermöglichen, deren zylindrischen Hauptkörper (9') sie umschließt, um jegliche Gaszirkulation zwischen der Außenumgebung und dem Innern des Ofens an der Stelle, wo sich diese Dichtung befindet, zu verhindern, wobei diese Einführvorrichtung **dadurch gekennzeichnet ist, dass** sie eine Schleuse (13) aufweist, mit deren Hilfe die Oberseite des Ofens oberhalb der Düse dicht verschlossen werden kann, und zwar sowohl mit als auch ohne Vorhandensein der Vorform und in der Weise, dass ein innerer Überdruck des Inertgases am Eingang des Ofens aufrechterhalten wird, um das Eindringen von Umgebungsluft an dieser Stelle zu verhindern.

2. Einführvorrichtung nach Anspruch 1, **dadurch gekennzeichnet, dass** sie mit einer Schleuse (13) versehen ist, die Folgendes aufweist:
- einen Verschluss (16) oberhalb der Düse (6'), um das Absenken des Vorformkörpers in die Ofenkammer zu ermöglichen, wenn der Verschluss geöffnet ist, und um die Oberseite des Ofens oberhalb der Düse dicht zu verschließen, wenn er geschlossen ist, während auf Höhe dieses Verschlusses keine Vorform vorhanden ist;
- eine Schleusenkammer, die in Längsrichtung durch zwei Stufen von Dichtungen (17A, 17B) begrenzt ist, in denen vorgesehen ist, dass der Körper einer Vorform dicht abschließend gleitet, wobei diese Kammer in Verbindung mit dem Verschluss die Funktion einer Dichtungsschleuse gegenüber dem Ofen erfüllt, und zwar mit Hilfe von Dichtungen auf mindestens einer der Stufen, sobald eine Vorform auf Höhe von mindestens einer dieser Stufen vorhanden ist, welche diese Vorform verschließt, und sobald die Länge des Vorformkörpers größer oder mindestens gleich einer maximalen Nutzungsgrenze "Imin" für das Ziehen der Vorform ist.

3. Einführvorrichtung nach Anspruch 2, bei der der Abstand zwischen den Dichtungsstufen der Schleuse, welche diese Stufen aufweist, an die Mindestlänge gebunden ist, welche der für die Vorformen vorgesehenen maximalen Nutzungsgrenze "Imin" entspricht.

4. Einführvorrichtung nach einem der Ansprüche 1 bis 3, bei der die Düse mit Luftkanälen (15) zum Einblasen des Inertgases versehen ist, die zur Schleuse hin gerichtet sind, mit der diese Vorrichtung ausgestattet ist, und zusätzlich Einblasluftkanäle (14), die zum Innern des Ofens hin gerichtet sind.

5. Einführvorrichtung nach einem der Ansprüche 1 bis 4, bei der vorgesehen ist, dass mindestens eine der Stufen aus übereinander liegenden Dichtungen (17A bzw. 17B) aus Graphit besteht.

6. Einführvorrichtung nach Anspruch 5, bei der eine Kühlung der Dichtungen vorgesehen ist, um ihre vorzeitige Abnutzung zu vermeiden.

7. Faserziehofen (2') des Typs, der eine Kammer (4') aufweist, an deren Oberseite eine Öffnung ausgespart ist, um das Einführen einer in einer vertikalen Translationsbewegung von oben nach unten bewegten Vorform in der Faserziehphase zu ermöglichen, sowie eine Vorrichtung (13') zum Einführen einer Vorform oberhalb der Kammer, **dadurch gekennzeichnet, dass** diese Einführvorrichtung eine Einführvorrichtung nach mindestens einem der Ansprüche 1 bis 6 ist.

## Claims

1. An inlet arrangement for inserting a preform (3') into a furnace (1') for drawing a fiber (2'), which furnace is of the type including an enclosure (4') at the top of which there are both an opening to allow insertion of a preform which moves vertically downwards in translation during fiber drawing, and a preform inlet arrangement (13') comprising both an injector (6') situated at the level of the preform inlet opening to inject inert gas onto the perimeter of the preform to fill the enclosure of the furnace, and at least one seal (17B) fixed by means of a seal support above the injector and designed to allow the preform to pass therethrough with the cylindrical main body (9') of the preform being surrounded to prevent gas circulating between the surrounding environment and the inside of the furnace at the level where the seal is situated, said inlet arrangement being **characterized in that** it further comprises an airlock (13) for closing and sealing the top of the furnace, above the injector, whether a preform is present or absent, and for maintaining a positive internal inert gas pressure at the furnace inlet to prevent the surrounding entering at that level.

2. An inlet arrangement according to claim 1, **characterized** it that it includes an airlock (13) including:
- a closure member (16) above the injector (6') to enable the preform body to be lowered into the enclosure of the furnace when it is open and to close and seal the top of the furnace above the injector when it is closed in the absence of a preform at its level; and
- an airlock chamber defined longitudinally by two stages of seals (17A, 17B) in which the body of a preform can slide in a sealed manner, said chamber fulfilling a furnace airlock function in conjunction with the seals of at least one stage of the closure member as soon as a preform is present at the level of at least one of said stages, which it closes, and the length of the body (9') of the preform is greater than or at least equal to a maximum preform drawing operating limit "Imin".

3. An inlet arrangement according to claim 2, wherein the distance between the stages of seals of its airlock is related to a minimum length that corresponds to a maximum preform operating limit "Imin".

4. An inlet arrangement according to any one of claims 1 to 3, wherein the injector has inert gas injector vents (15) which point towards its airlock in addition to injector vents (14) which point towards the inside of the furnace.

5. An inlet arrangement according to any one of claims 1 to 4, wherein at least one of the stages of seals is made up of stacked graphite seals (17A and/or 17B).

6. An inlet arrangement according to claim 5, wherein the seals are cooled to prevent premature deterioration.

7. A furnace for drawing fiber (2') including an enclosure (4') at the top of which is an opening to allow insertion of a preform, which moves vertically downwards in translation during fiber drawing, and a preform inlet arrangement (13') above the enclosure, **characterized in that** the inlet arrangement is an inlet arrangement according to any one of claims 1 to 6.
